# EUROPÄISCHE PATENTANMELDUNG

(11) **EP 0 727 452 A1**
(43) Veröffentlichungstag der Anmeldung: **21.08.1996**
(21) Anmeldenummer: 95120334.8
(22) Anmeldetag: 21.12.1995
(51) Int. Cl.: C08G 18/79, C08G 18/80

(54) **Uretdiongruppenhaltige Polyisocyanate**

(30) Priorität: 18.02.1995 DE 19505566
(71) Anmelder: HÜLS AKTIENGESELLSCHAFT, D-45764 Marl (DE)
(72) Erfinder: Gras, Rainer, Dr., D-44879 Bochum (DE)

(57) **Zusammenfassung**

Uretdiongruppenhaltige Polyisocyanate, enthaltend
A) 55 bis 87 Gew.-% Uretdion,
B) 10 bis 30 Gew.-% Blockierungsmittel,
C) 3 bis 30 Gew.-% Polyol mit mehr als zwei Hydroxylgruppen und/oder
   Kettenverlängerer mit mehr als zwei Hydroxylgruppen, wobei die Polyisocyanate mehr als zwei endständige partiell oder vollständig blockierte Isocyanatgruppen enthalten und Molmassen von 1 000 bis 10 000 aufweisen.

## Beschreibung

Gegenstand der vorliegenden Erfindung sind uretdiongruppenhaltige Polyisocyanate mit mehr als zwei endständigen, partiell oder total blockierten Isocyanatgruppen, Verfahren zu ihrer Herstellung sowie die Verwendung in Polyurethan-Lacksystemen.

Polyisocyanate, insbesondere für die Verwendung in Polyurethan-Pulverlacken, die Uretdiongruppen enthalten, sind insbesondere aus der DE-OS 30 30 554 bekannt. Derartige Polyisocyanate weisen jedoch nur zwei endständige partiell oder vollständig blockierte Isocyanatgruppen auf und sind streng linear aufgebaut. Wie der EP-A-254 152 (Seite 2, Spalte 1, Zeile 63 bis Satzende) zu entnehmen ist, ist diese Tatsache in dar Praxis von großem Nachteil.

Aufgabe der vorliegenden Erfindung war es daher, uretdiongruppenhaltige Polyisocyanate zur Verfügung zu stellen, die den Nachteil der bekannten uretdiongruppenhaltigen Polyisocyanate nicht aufweisen.

Die Aufgabe wurde durch die Lehre gemäß den Patentansprüchen gelöst.

Gegenstand der Erfindung sind demnach uretdiongruppenhaltige Polyisocyanate, enthaltend
A) 55 bis 87 Gew.-% Uretdion,
B) 10 bis 30 Gew.-% Blockierungsmittel,
C) 3 bis 30 Gew.-% Polyol mit mehr als zwei Hydroxylgruppen und/oder Kettenverlängerer mit mehr als zwei Hydroxylgruppen,
wobei die Polyisocyanate mehr als zwei endständige partiell oder vollständig blockierte Isocyanatgruppen enthalten und Molmassen von 1 000 bis 10 000 aufweisen.

Gegenstand der Erfindung ist außerdem ein Verfahren zur Herstellung von uretdiongruppenhaltigen Polyisocyanaten, wobei
1. die partielle Umsetzung der NCO-Gruppen des Uretdions (Komponente A) mit der berechneten Menge Blockierungsmittel (Komponente B) erfolgt, und
2. anschließend in einer zweiten Stufe die partielle oder vollständige Umsetzung der restlichen NCO-Gruppen mit der Komponente C erfolgt.

Weiterer Gegenstand der Erfindung ist die Verwendung der uretdiongruppenhaltigen Polyisocyanate in Kombination mit hydroxylgruppenhaltigen Polymeren zur Herstellung von transparenten oder pigmentierten Polyurethan-Lacksystemen, insbesondere Pulverlacken, mit hoher Reaktivität, sowie transparente oder pigmentierte Polyurethan-Pulverlacksysteme, welche die erfindungsgemäßen uretdiongruppenhaltigen Polyisocyanate enthalten.

Die erfindungsgemäß eingesetzten Uretdione (Komponente A) werden aus Diisocyanaten nach den bekannten Methoden erhalten, und prinzipiell sind alle bekannten Diisocyanate einsetzbar.

Bevorzugte Uretdione stammen jedoch aus den Diisocyanaten, ausgewählt aus der Gruppe Hexamethylendiisocyanat (HDI), 2-Methylpentandiisocyanat-1.5 (DI51), 2.2.4(2.4.4)-Trimethylhexamethylendiisocyanat oder Isophorondiisocyanat (IPDI), wobei diese allein oder in Mischungen als Komponente A eingesetzt werden können.

Besonders bevorzugt wird das Uretdion des Isophorondiisocyanats verwendet.

Das isocyanuratfreie Uretdion des Isophorondiisocyanats ist bei Raumtemperatur hochviskos und hat eine Viskosität von größer als 10⁶ mPa·s, bei 60 °C liegt die Viskosität bei 13 · 10³ mPa·s und bei 80 °C bei 1,4 · 10³ mPa·s. Der freie NCO-Gehalt liegt zwischen 16,8 und 18,5 Gew.-%, d. h. daß mehr oder minder hohe Anteile an Polyuretdion des IPDI im Reaktionsprodukt vorliegen müssen. Der Monomergehalt liegt bei ≈ 1 %. Der Gesamt-NCO-Gehalt des Reaktionsproduktes nach dem Erhitzen auf 180 - 200 °C beträgt 37,5 - 37,8 Gew.-%.

Als Blockierungsmittel (Komponente B) können erfindungsgemäß Phenole, Alkohole, Acetessigsäureester, Lactame, Oxime, sterisch gehinderte sekundäre Amine oder Imidazoline eingesetzt werden.

Besonders bevorzugt eingesetzt werden Caprolactam (CL), Acetonoxim, Methylethylketoxim (MEK-ox), Cyclohexanonoxim, Methylisobutylketoxim, Dicyclohexylamin (DCA) oder Phenylimidazolin.

Als Polyole (Komponente C) kommen Glycerin, Trimethylolpropan (TMP), Ditrimethylolpropan, Trimethylolethan, Hexantriol-1.2.6, Butantriol-1.2.4, Trishydroxyethylisocyanurat (THEIC), Pentaerythrit, Mannit oder Sorbit in Frage, wobei Trimethylolethan, Trimethylolpropan und Trishydroxyethylisocyanurat bevorzugt eingesetzt werden. Sie werden allein oder in Mischungen verwendet.

Die erfinderischen uretdiongruppenhaltigen Polyisocyanate enthalten als Kettenverlängerer (Komponente C) hydroxylgruppenhaltige Polyester mit einer Molmasse zwischen 250 und 2 000, vorzugsweise 300 bis 1 500. Sie werden hergestellt z. B. durch Kombination von Polyolen und Dicarbonsäuren.

Zur Herstellung der Kettenverlängerer werden bevorzugt die folgenden Polyole eingesetzt: Glycerin, Trimethylolpropan (TMP), Ditrimethylolpropan, Trimethylolethan, Hexantriol-1.2.6, Butantriol-1.2.4, Trishydroxyethylisocyanurat (THEIC), Pentaerythrit, Mannit oder Sorbit, sowie Diethylenglykol, Triethylenglykol, Tetraethylenglykol, Dipropylenglykol, Polypropylenglykole, Polybutylenglykole, Xylylenglykol oder Hydroxypivalinsäureneopentylglykolester, wobei Trimethylolethan, Trimethylolpropan und Trishydroxyethylisocyanurat bevorzugt eingesetzt werden. Sie werden allein oder in Mischungen verwendet.

Zu den bevorzugten Dicarbonsäuren zählen aliphatische, gegebenenfalls alkylverzweigte, wie Bernstein-, Adipin-, Kork-, Azelain- und Sebazinsäure, 2.2.4(2.4.4)-Trimethyladipinsäure. Weiterhin werden auch Lactone oder Hydroxycarbonsäuren eingesetzt, wobei ε-Caprolacton oder Hydroxycapronsäure besonders bevorzugt sind.

Polyole und Kettenverlängerer der Komponente C können jeweils allein oder in Mischungen eingesetzt werden, wobei das Mischungsverhältnis unerheblich ist.

Die erfindungsgemäßen uretdiongruppenhaltigen Polyisocyanate werden nach dem nunmehr erläuterten Verfahren hergestellt.

Die Herstellung erfolgt in zwei aufeinanderfolgenden Stufen, so daß
1. die partielle Umsetzung der NCO-Gruppen des Uretdions (Komponente A) mit der berechneten Menge Blockierungsmittel (Komponente B) erfolgt, und
2. anschließend in einer zweiten Stufe die partielle oder vollständige Umsetzung der restlichen NCO-Gruppen mit der Komponente C erfolgt.

Die Umsetzung der 1. sowie der 2. Stufe kann jeweils mit oder ohne Lösungsmittel erfolgen. Im Falle des Einsatzes eines Lösemittels kann dies ausgewählt werden aus der Gruppe der aromatischen bzw. aliphatischen Kohlenwasserstoffe, wie z. B. Benzol, Toluol, Ethyl- oder Butylacetat, Aceton, Methylethylketon, Methylisobutylketon oder auch chlorierte aromatische oder aliphatische Kohlenwasserstoffe, sowie beliebige Gemische dieser oder anderer inerter Lösemittel.

Wird auf Lösemittel verzichtet, so erfolgt die Umsetzung der 1. Stufe diskontinuierlich oder, bevorzugt kontinuierlich unter Verwendung eines "Statischen Mischers". Die Umsetzung der 2. Stufe findet in einem Intensivkneter statt, wobei bevorzugt ein Zweiwellenextruder eingesetzt wird.

Zusätzlich können Katalysatoren die Umsetzung beschleunigen, wobei diese in einer Konzentration von 0,01 bis 1 Gew.-%, besonders bevorzugt 0,03 bis 0,5 Gew.-%, eingesetzt werden. Bevorzugt werden als Katalysator organische Zinnverbindungen eingesetzt. Genannt wird hier besonders Dibutylzinndilaurat (DBTL). Andere Katalysatoren sind jedoch nicht von vornherein als ungeeignet anzusehen.

Die erfindungsgemäßen uretdiongruppenhaltigen Polyisocyanate finden Verwendung insbesondere in Polyurethan-Pulverlacksystemen, die sich überraschenderweise durch erhöhte Reaktivität auszeichnen. Die erfindungsgemäßen Polyurethan-Pulverlacksysteme bestehen aus den erfindungsgemäßen uretdiongruppenhaltigen Polyisocyanaten in Kombination mit hydroxylgruppenhaltigen Polymeren.

Als Reaktionspartner für PUR-Pulverlacke kommen Verbindungen in Frage, welche solche funktionellen Gruppen tragen, die sich mit Isocyanatgruppen während des Härtungsprozesses in Abhängigkeit von der Temperatur und Zeit umsetzen, z. B. Hydroxyl-, Carboxyl-, Mercapto-, Amino-, Urethan-, (Thio)Harnstoffgruppen. Als Polymere können Polymerisate, Polykondensate und Polyadditionsverbindungen eingesetzt werden.

Bevorzugte Komponenten sind in erster Linie Polyether, Polythioether, Polyacetale, Polyesteramide, Epoxidharze mit Hydroxylgruppen im Molekül, Aminoplaste und ihre Modifizierungsprodukte mit polyfunktionellen Alkoholen, Polyazomethine, Polyurethane, Polysulfonamide, Melaminabkömmlinge, Celluloseester und -ether, teilweise verseifte Homo- und Copolymerisate von Vinylestern, insbesondere aber Polyester und Acrylatharze.

Für die Herstellung von Polyestern bevorzugte Carbonsäuren können aliphatischer, cycloaliphatischer, aromatischer und/oder heterocyclischer Natur sein und gegebenenfalls durch Halogenatome substituiert und/oder ungesättigt sein. Als Beispiele hierfür seien genannt: Bernstein-, Adipin-(As), Kork-, Azelain, Sebacin-, Phthal-, Terephthal- (Ts), Isophthal-(Is), Trimellit-, Pyromellit-, Tetrahydrophthal-, Hexahydrophthal-, Hexahydroterephthal-, Di- und Tetrachlorphthal-, Endomethylentetrahydrophthal-, Glutar-, Malein- und Fumarsäure bzw. - soweit zugänglich - deren Anhydride, Terephthalsäuredimethylester (DMT), Terephthalsäure-bis-glykolester, weiterhin cyclische Monocarbonsäuren wie Benzoesäure, p-tert.-Butylbenzoesäure oder Hexahydrobenzoesäure.

Als mehrwertige Alkohole kommen z. B. Ethylenglykol, Propylenglykol-1.2 und -1.3, Butylenglykol-1.4 und -2.3, Di-β-hydroxyethylbutandiol, Hexandiol-1.6, Octandiol-1.8, Neopentylglykol, Cyclohexandiol, Bis-(1.4-hydroxymethyl)-cyclohexan, 2.2-Bis-(4-hydroxycyclohexyl)-propan, 2.2-Bis-[4-(β-hydroxyethoxy)-phenyl]-propan, 2-Methyl-propandiol-1.3, 3-Methyl-pentandiol-1.5, 2.2.4(2.4.4)-Trimethylhexandiol-1.6, Glycerin, Trimethylolpropan, Trimethylolethan, Hexantriol-1.2.6, Butantriol-1.2.4, Tris-(β-hydroxyethyl)-isocyanurat, Pentaerythrit, Mannit und Sorbit sowie Diethylenglykol, Triethylenglykol, Tetraethylenglykol, Dipropylenglykol, Polypropylenglykole, Polybutylenglykole, Xylylenglykol und Hydroxypivalinsäureneopentylglykolester, in Frage.

Auch Mono- und Polyester als Lactone, z. B. ε-Caprolacton oder Hydroxycarbonsäuren, z. B. Hydroxypivalinsäure, ω-Hydroxydecansäure, ω-Hydroxycapronsäure, Thioglykolsäure, können eingesetzt werden. Polyester aus den obengenannten Polycarbonsäuren bzw. deren Derivaten und Polyphenolen, wie Hydrochinon, Bisphenol-A, 4.4'-Dihydroxybiphenyl oder Bis-(4-hydroxyphenyl)-sulfon; Polyester der Kohlensäure, die aus Hydrochinon, Diphenylolpropan, p-Xylylenglykol, Ethylenglykol, Butandiol oder Hexandiol-1.6 und anderen Polyolen durch übliche Kondensationsreaktionen, z. B. mit Phosgen oder Diethyl- bzw. Diphenylcarbonat, oder aus cyclischen Carbonaten wie Glykolcarbonat oder Vinylidencarbonat, durch Polymerisation in bekannter Weise erhältlich sind; Polyester der Kieselsäure, Polyester der Phosphorsäure, z. B. aus Methan-, Ethan-, β-Chlorethan-, Benzol- oder Styrolphosphorsäure-, -phosphorsäurechlorid oder phosphorsäureester und Polyalkoholen oder Polyphenolen der obengenannten Art; Polyester der Borsäure; Polysiloxane, wie z. B. die durch Hydrolyse von Dialkyldichlorsilanen mit Wasser und nachfolgende Behandlung mit Polyalkoholen, die durch Anlagerung von Polysiloxandihydriden an Olefinen, wie Allylalkohol oder Acrylsäure, erhältlichen Produkte.

Bevorzugte Polyester sind z. B. auch die Reaktionsprodukte von Polycarbonsäuren und Glycidylverbindungen, wie sie z. B. in der DE-PS 24 10 513 beschrieben sind.

Die besonders bevorzugt eingesetzten hydroxylgruppenhaltigen Polyester haben eine OH-Funktionalität von > 2, eine OH-Zahl von 20 bis 200 mg KOH/g, vorzugsweise von 30 bis 150 mg KOH/g, eine Viskosität von < 60 000 mPa·s, vorzugsweise < 40 000 mPa·s bei 140 °C und einem Schmelzpunkt von > 70 °C bis ≦ 120 °C, vorzugsweise von 75 °C bis 100 °C aufzuweisen.

Beispiele für Glycidylverbindungen, die verwendet werden können, sind Ester des 2.3-Epoxy-1-propanols mit monobasischen Säuren, die 4 bis 18 Kohlenstoffatome haben, wie Glycidylpalmitat, Glycidyllaurat und Glycidylstearat, Alkylenoxide mit 4 bis 18 Kohlenstoffatomen, wie Butylenoxid und Glycidylether, wie Octylglycidylether.

Als Dicarbonsäuren können bei diesem Verfahren sämtliche unter 2 im folgenden aufgeführte Polycarbonsäuren verwendet werden, Monocarbonsäuren, welche beispielsweise unter 3 aufgeführt sind, können ebenfalls eingesetzt werden.

Bevorzugte Komponenten sind auch monomere Ester, z. B. Dicarbonsäure-bis-(hydroxy(alkohol)ester, Monocarbonsäureester von mehr als zweiwertigen Polyolen und Oligoester, die durch Kondensationsreaktionen aus in der Lackchemie üblichen Rohstoffen hergestellt werden können. Als solche sind z. B. anzusehen:
1. Alkohole mit 2 bis 24, vorzugsweise 2 bis 10 C-Atomen, und 2 bis 6 an nicht-aromatischen C-Atomen gebundenen OH-Gruppen, z. B. Ethylenglykol, Propylenglykol, Diethylenglykol, Dipropylenglykol, Butandiole, Neopentylglykol, Hexandiole, Hexantriole, Perhydrobisphenol, Dimethylolcyclohexan, Glycerin, Trimethylolethan, Trimethylolpropan, Pentaerythrit, Dipentaerythrit, Mannit;
2. Di- und Polycarbonsäuren mit 4 bis 36 C-Atomen und 2 bis 4 Carboxylgruppen sowie deren veresterungsfähige Derivate, wie Anhydride und Ester, z. B. Phthalsäure(anhydrid), Isophthalsäure, Terephthalsäure, Alkyltetrahydrophthalsäure, Endomethylentetrahydrophthalsäureanhydrid, Adipinsäure, Bernsteinsäure, Maleinsäure, Fumarsäure, Dimerfettsäuren, Trimellithsäure, Pyromellitsäure, Azelainsäure;
3. Monocarbonsäuren mit 6 bis 24 C-Atomen, z. B. Caprylsäure, 2-Ethylhexansäure, Benzoesäure, p-tert.-Butylbenzoesäure, Hexahydrobenzoesäure, Monocarbonsäuregemische natürlicher Öle und Fette, wie Cocosfettsäure, Sojaölfettsäure, Ricinenfettsäure, hydrierte und isomerisierte Fettsäuren, wie "Konjuvandol"-Fettsäure sowie deren Gemische, wobei die Fettsäuren auch als Glyceride einsetzbar sind und unter Umesterung und/oder Dehydratisierung umgesetzt werden können;
4. einwertige Alkohole mit 1 bis 18 C-Atomen, z. B. Methanol, Ethanol, Isopropanol, Cyclohexanol, Benzylalkohol, Isodecanol, Nonanol, Octanol, Oleylalkohol.

Die Polyester können auf an sich bekannte Weise durch Kondensation in einer Inertgasatmosphäre bei Temperaturen von 100 bis 260 °C, vorzugsweise 130 bis 220 °C, in der Schmelze oder in azeotroper Fahrweise gewonnen werden, wie es z. B. in Methoden der Organischen Chemie (Houben-Weyl), Bd. 14/2, 1 - 5, 21-23, 40-44, Georg Thieme Verlag, Stuttgart, 1963 oder bei C. R. Martens, Alkyd Resins, 51 - 59, Reinhold Plastics Appl. Series, Reinhold Publishing Comp., New York, 1961, beschrieben ist.

Bevorzugte Acrylatharze, welche als OH-Komponente verwendet werden können, sind Homo- oder Copolymerisate, wobei z. B. folgende Monomere als Ausgangsprodukte gewählt werden können: Ester der Acrylsäure und Methacrylsäure mit zweiwertigen, gesättigten, aliphatischen Alkoholen mit 2 bis 4 C-Atomen, wie z. B. 2-Hydroxyethylacrylat, 2-Hydroxypropylacrylat, 4-Hydroxybutylacrylat und die entsprechenden Methacrylsäureester; Acrylsäure-und Methacrylsäurealkylester mit 1 bis 18 C-Atomen in der Alkoholkomponente, wie z. B. Methacrylat, Ethylacrylat, Propylacrylat, Isopropylacrylat, n-Butylacrylat, tert.-Butylacrylat, 2-Ethylhexylacrylat, Stearylacrylat und die entsprechenden Methacrylsäureester; Acrylsäure- und Methacrylsäurecyclohexylester; Acrylnitril und Methacrylnitril, Acrylamid und Methacrylamid; N-Methoxymethyl(meth)acrylsäureamid.

Besonders bevorzugte Acrylatharze sind Copolymere aus
a. 0 bis 50 Gew.-% Ester der Acryl- oder Methacrylsäure mit zwei- oder mehrwertigen Alkoholen, wie Butandiol-(1.4)-monoacrylat, Hydroxypropyl(meth)acrylat; ferner Vinylglykol, Vinylthioethanol, Allylalkohol, Butandiol-1.4-monovinylether;
b. 5 bis 95 Gew.-% Ester der Acrylsäure oder Methacrylsäure mit einwertigen Alkoholen, die 1 bis 12 Kohlenstoffatome enthalten, wie z. B. Methylmethacrylat, Ethylacrylat, n-Butylacrylat oder 2-Ethylhexylacrylat;
c. 0 bis 50 Gew.-% aromatischer Vinylverbindungen, wie Styrol, Methylstyrol oder Vinyltoluol;
d. 0 bis 20 Gew.-% anderer Monomere mit funktionellen Gruppen, wie z. B. Acrylsäure, Methacrylsäure, Crotonsäure, Itaconsäure, Maleinsäure, Fumarsäure, Maleinsäureanhydrid, Maleinsäurehalbester, Acrylamid, Methacrylamid, Acrylnitril oder N-Methylol(meth)acrylamid sowie Glycidyl(meth)acrylat, wobei der Anteil der Gruppe a. und/oder b. mindestens 5 Gew.-% betragen.

Die Acrylatharze können nach den üblichen Methoden hergestellt werden, also durch Lösungs-, Suspensions-, Emulsions- oder Fällungspolymerisation; bevorzugt aber durch Substanzpolymerisation, die ihrerseits mittels UV-Licht initiiert werden kann.

Als weitere Polymerisationsinitiatoren werden die üblichen Peroxide oder Azoverbindungen, wie z. B. Dibenzoylperoxid, tert.-Butylperbenzoat oder Azodiisobutyronitril verwendet. Das Molekulargewicht kann z. B. mit Schwefelverbindungen, wie tert.-Dodecylmercaptan, geregelt werden.

Bevorzugte Polyether können z. B. durch Polyaddition von Epoxiden, wie Ethylenoxid, Propylenoxid, Butylenoxid, Trimethylenoxid, 3,3-Bis-(chlormethyl)-oxacyclobutan, Tetrahydrofuran, Styroloxid, dem Bis-(2.5)-epoxypropylether des Diphenylolpropans oder Epichlorhydrin mit sich selbst, z. B. in Gegenwart von BF₃, oder durch Anlagerung dieser Epoxide, gegebenenfalls im Gemisch oder nacheinander, an Startkomponenten mit reaktionsfähigen Wasserstoffatomen, wie Alkohole oder Amine, z. B. Wasser, Ethylenglykol, Propylenglykol-(1.3) oder -(1.2), Pentamethylenglykol, Hexandiol, Decamethylenglykol, Trimethylolpropan, 4.4'-Dihydroxydiphenylpropan, Anilin, Ammoniak, Ethanolamin, Ethylendiamin, Di(β-hydroxypropyl)-methylamin, Di-(β-hydroxyethyl)-anilin, Hydrazin sowie auch hydroxyalkylierten Phenolen, wie z. B. Di-(β-hydroxyethoxy)-resorcin, hergestellt werden.

Ebenso können hydroxylgruppenhaltige Polyurethane und/oder Polyharnstoffe eingesetzt werden.

Als hydroxylgruppenhaltige Polymere können selbstverständlich auch Gemische mehrerer Stoffe eingesetzt werden.

Das Mischungsverhältnis der hydroxylgruppenhaltigen Polymeren und den uretdiongruppenhaltigen Polyisocyanaten wird in der Regel so gewählt, daß auf eine OH-Gruppe 0,6 - 1,2, bevorzugt 0,8 - 1,1, ganz besonders bevorzugt 1,0 NCO-Gruppe kommt.

Die Isocyanatkomponente wird für die Herstellung von PUR-Pulverlacken mit dem geeigneten hydroxylgruppenhaltigen Polymeren und gegebenenfalls Katalysatoren sowie Pigmenten und üblichen Hilfsmitteln, wie Füllstoffen und Verlaufsmitteln, z. B. Siliconöl, Acrylatharzen, gemischt und in der Schmelze homogenisiert. Dies kann in geeigneten Aggregaten, wie z. B. beheizbaren Knetern, vorzugsweise jedoch durch Extrudieren, erfolgen, wobei Temperaturobergrenzen von 130 bis 140 °C nicht überschritten werden sollten. Die extrudierte Masse wird nach Abkühlen auf Raumtemperatur und nach geeigneter Zerkleinerung zum sprühfertigen Pulver vermahlen. Das Auftragen des sprühfertigen Pulvers auf geeignete Substrate kann nach den bekannten Verfahren, wie z. B. durch elektrostatisches Pulversprühen, Wirbelsintern, elektrostatisches Wirbelsintern, erfolgen. Nach dem Pulverauftrag werden die beschichteten Werkstücke zur Aushärtung 60 bis 4 Minuten auf eine Temperatur von 150 bis 220 °C, vorzugsweise 30 bis 6 Minuten bei 160 bis 200 °C, erhitzt.

Nachfolgend wird der Gegenstand der Erfindung anhand von Beispielen näher erläutert.

### A Herstellung der erfindungsgemäßen uretdiongruppenhaltigen Polyisocyanate

### A 1 Polyol-Kettenverlängerer

### Allgemeine Herstellungsvorschrift

Die Ausgangskomponenten - vgl. Tabelle 1 - werden in einen Reaktor gegeben und mit Hilfe eines Ölbades auf ≈ 140 °C erhitzt. Nachdem die Stoffe zum größten Teil geschmolzen sind, werden 0,1 Gew.-% Di-n-butylzinnoxid als Katalysator zugesetzt. Die erste Wasserabspaltung tritt bei 150 bis 160 °C auf. Innerhalb von 2 bis 3 Stunden wird die Temperatur auf 180 °C bis 190 °C erhöht und die Veresterung während weiteren 8 bis 10 Stunden zu Ende gebracht. Während der gesamten Reaktionszeit wird das Sumpfprodukt gerührt und ein schwacher Stickstoffstrom durch das Reaktionsgemisch geleitet. Die Säurezahl der Polyester lag stets < 2 mg KOH/g.

**Tabelle 1**

| Polyol-Kettenverlängerer | | | | | | |
|---|---|---|---|---|---|---|
| Beispiel A 1 | Ausgangskomponenten in mol | | | | Kenndaten | |
| | As | NPG | HD | TMP | OH-Zahl mg KOH/g | Viskosität 25 °C mPa·s |
| 1 | 2 | 1 | 1 | 1 | 270 - 285 | 5 500 |
| 2 | Polycaprolactone Fa. Interox-Capa 304 | | | | 535 - 550 | 240 |
| 3 | Polycaprolactone Fa. Interox-Capa 305 | | | | 305 - 320 | 1 350 |
| 4 | Polycaprolactone Fa. Interox-Capa 316 | | | | 210 - 220 | 2 300 |

### A 2 Uretdiongruppenhaltige Polyisocyanate

### Allgemeine Herstellungsvorschriften

### A 2.1 Mit Lösemittel

Das Uretdion oder ein Uretdion-Gemisch - vgl. Tabelle 2 - und der Katalysator (0,03 bis 1 Gew.-%) werden, gelöst im Lösemittel, im Reaktor vorgelegt. Unter starkem Rühren und Inertgasatmosphäre wird die berechnete Menge Blockierungsmittel portionsweise so schnell zugesetzt, daß die Reaktionstemperatur 100 °C nicht übersteigt. Die Umsetzung wird mittels titrimetrischer NCO-Bestimmung kontrolliert; die Reaktionszeit der ersten Stufe beträgt 2 bis 5 Stunden. Anschließend wird dem partiell blockierten Uretdion die berechnete Menge Polyol und/oder Kettenverlängerer - vgl. Tabelle 2 - so zugesetzt, daß die Reaktionstemperatur 100 °C nicht übersteigt. Nach beendeter Zugabe der OH-Komponente wird solange gerührt, bis der NCO-Gehalt < 1 Gew.-% gesunken ist. Danach wird das Lösemittel entfernt, das Produkt abgekühlt und gegebenenfalls zerkleinert.

### A 2.2 Lösemittelfrei

Für die lösemittelfreie Herstellung wird das Uretdion ebenfalls im ersten Schritt mit der berechneten Menge Blockierungsmittel - vgl. Tabelle 2 - umgesetzt. Die erforderliche Katalysatormenge - 0,1 bis 1 Gew.-% - bezogen auf Endprodukt, wird bereits während der 1. Stufe zugesetzt. Nach Beendigung der Umsetzung wird das partiell blockierte Uretdion bei einer Temperatur von 80 bis 150 °C gemeinsam mit dem vorgewärmten (25 bis 130 °C) Polyol und/oder Kettenverlängerer in einen Doppelschneckenextruder eingespeist.

Der eingesetzte Extruder setzt sich aus zehn Gehäusen zusammen, davon fünf Heizzonen. Die Temperaturen der Heizzonen unterliegen einem großen Bereich - zwischen 50 und 180 °C - und können einzeln gesteuert werden. Alle Temperaturen sind Soll-Temperaturen, die Regelung in den Gehäusen erfolgt durch elektrische Heizung und pneumatische Kühlung. Das Düsenelement wird mittels Ölthermostat beheizt. Die Drehzahl der Doppelschnecke, aufgebaut mit Förderelementen, lag zwischen 50 und 380 Upm.

Das Reaktionsprodukt, das von 10 bis 130 kg/h anfällt, wird entweder abgekühlt, anschließend zerkleinert oder formiert und abgesackt oder bereits die Schmelze formiert, abgekühlt und abgesackt.

Die physikalischen und chemischen Kenndaten der erfinderischen Verfahrensprodukte sowie die molaren Zusammensetzungen sind in Tabelle 2 zusammengefaßt.

Die nach bekannten Verfahren hergestellten Uretdione hatten folgende NCO-Kenndaten:
IPDI-Uretdion
NCO-frei: 16,8 bis 18,5 Gew.-%
NCO-gesamt: 37,4 bis 37,8 Gew.-%
DI51-Uretdion
NCO-frei: 20,1 bis 21,2 Gew.-%
NCO-gesamt: 43,7 bis 44,9 Gew.-%
HDI-Uretdion (Desmodur® N 3400)
NCO-frei: 20,9 bis 22,1 Gew.-%
NCO-gesamt: 35,6 bis 36,5 Gew.-%

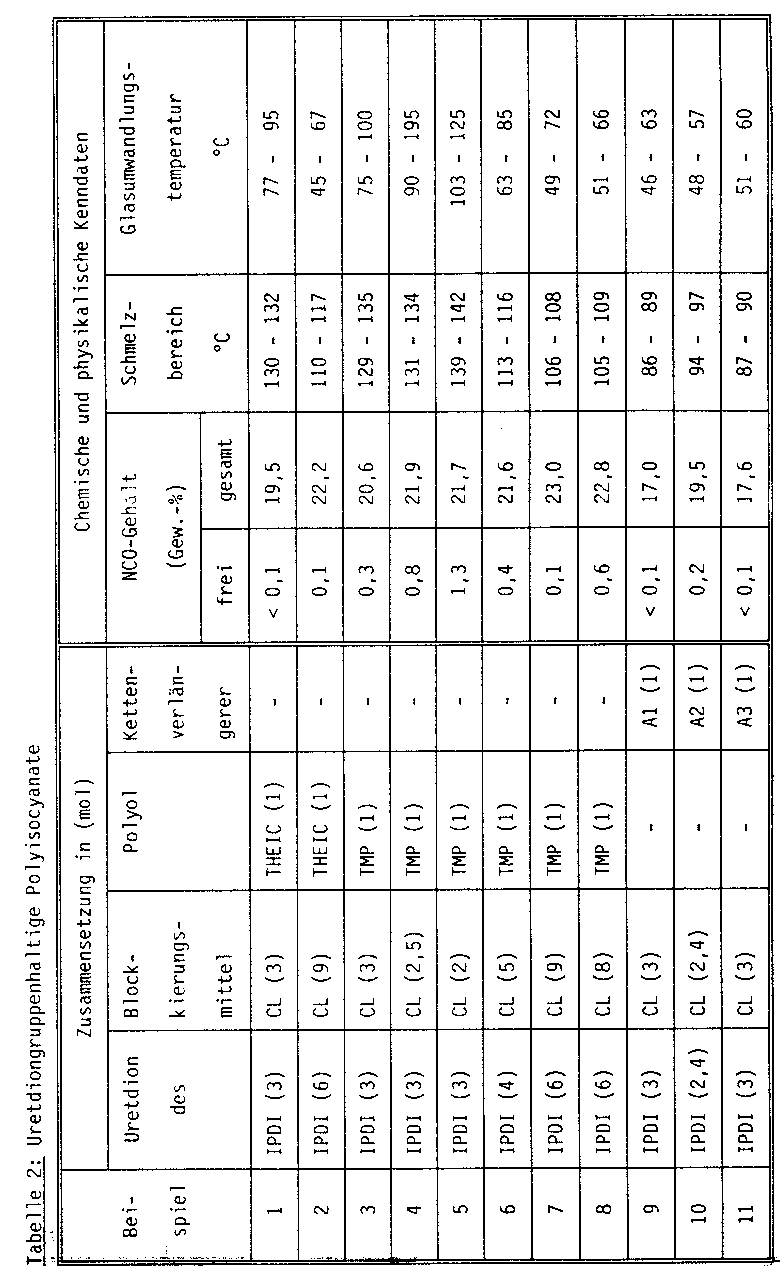

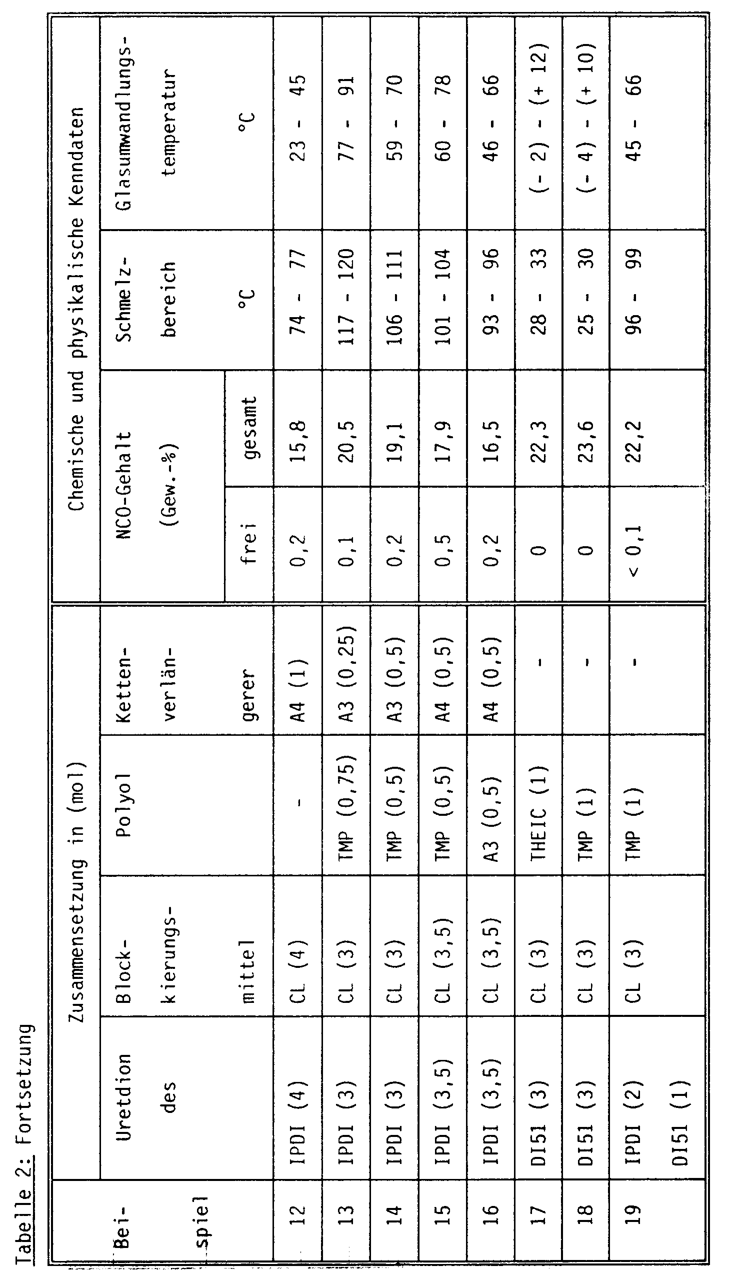

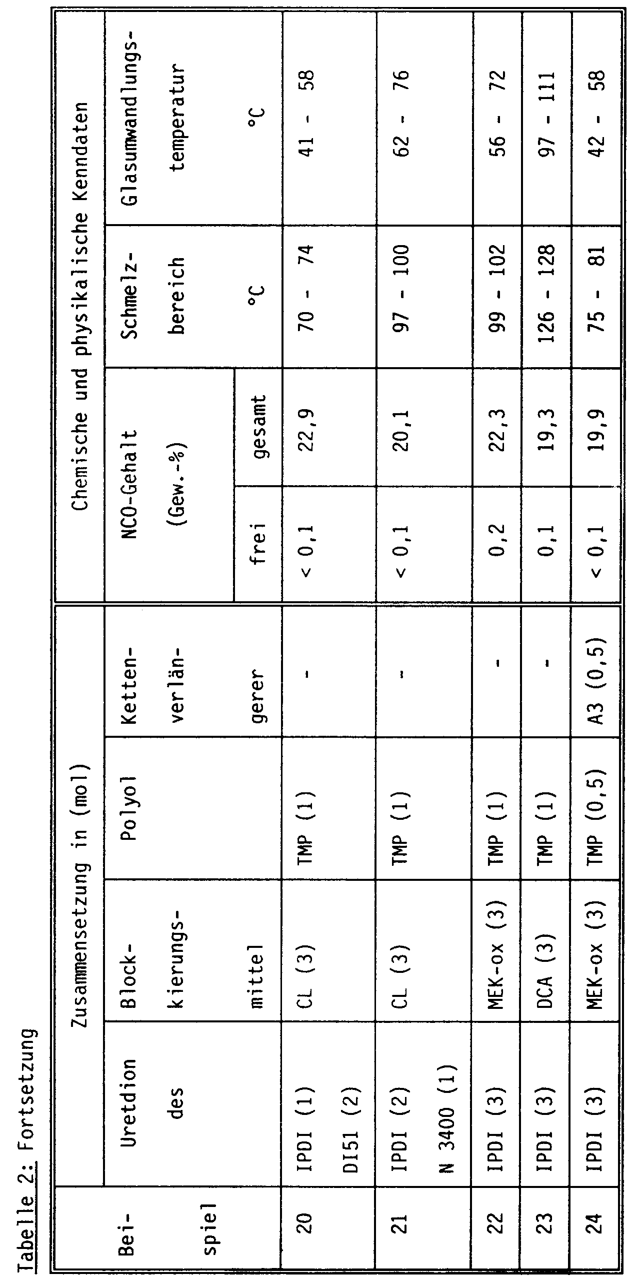

### B Polyester

Die folgende Tabelle 3 gibt einen Überblick über die zur Formulierung von PUR-Pulverlacken am Markt erhältlichen Polyester.

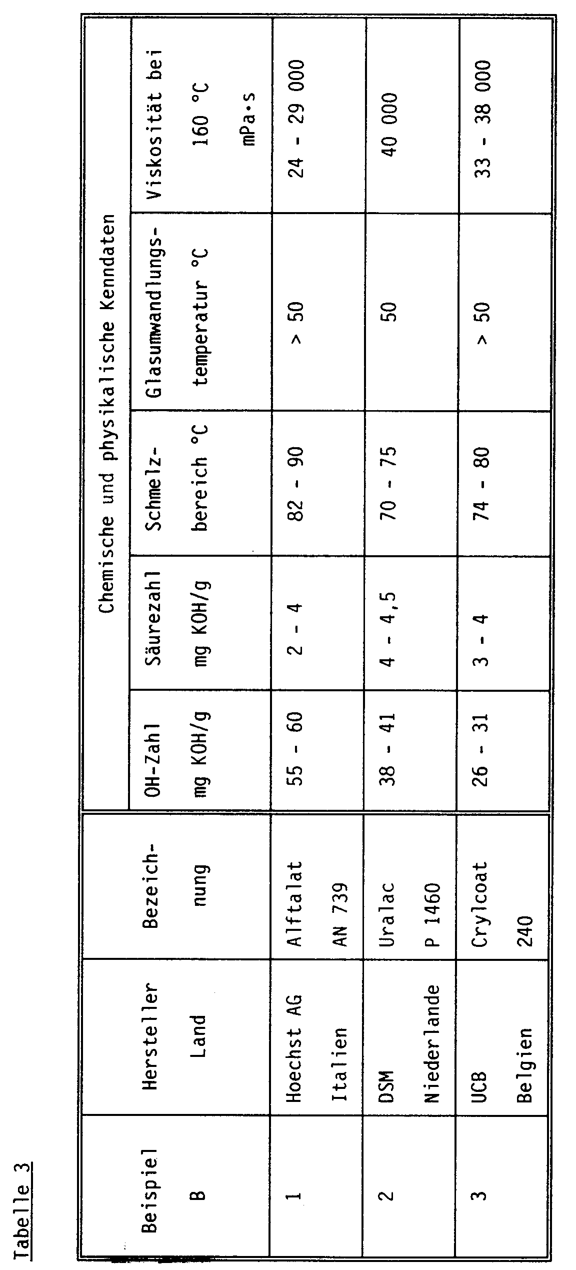

### C Polyurethan-Pulverlacke

### Allgemeine Herstellungsvorschrift

Die zerkleinerten Produkte, uretdiongruppenhaltige Polyisocyanate (Vernetzer), Polyester, Verlaufsmittel-, ggf. Katalysator-Masterbatch, werden ggf. mit dem Weißpigment in einem Kollergang innig vermischt und anschließend im Extruder bis maximal 130 °C homogenisiert. Nach dem Erkalten wird das Extrudat gebrochen und mit einer Stiftmühle auf eine Korngröße < 100 µm gemahlen. Das so hergestellte Pulver wird mit einer elektrostatischen Pulverspritzanlage bei 60 KV auf entfettete, ggf. vorbehandelte Eisenbleche appliziert und in einem Umlufttrockenschrank bei Temperaturen zwischen 160 und 200 °C eingebrannt.

### Verlaufsmittel-Masterbatch

Es werden 10 Gewichtsprozent des Verlaufsmittels - ein handelsübliches Copolymer von Butylacrylat und 2-Ethylhexylacrylat - in dem entsprechenden Polyester in der Schmelze homogenisiert und nach dem Erstarren zerkleinert.

### Katalysator-Masterbatch

Es werden 5 Gewichtsprozent des Katalysators - DBTL - in dem entsprechenden Polyester in der Schmelze homogenisiert und nach dem Erstarren zerkleinert.

Die Abkürzungen in den folgenden Tabellen bedeuten:
SD = Schichtdicke in µm
HK = Härte nach König (sec) (DIN 53 157)
HB = Härte nach Buchholz (DIN 53 153)
ET = Tiefung nach Erichsen (DIN 53 156)
GS = Gitterschnittprüfung (DIN 53 151)
GG 60 ° 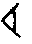 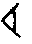 = Messung des Glanzes n. Gardner (ASTM-D 5233)
Imp rev. = Impact reverse in g·m

### C 1 Transparente Pulverlacke

Nach dem beschriebenen Verfahren wurden die transparenten Pulverlacke hergestellt, appliziert und zwischen 160 und 200 °C eingebrannt.

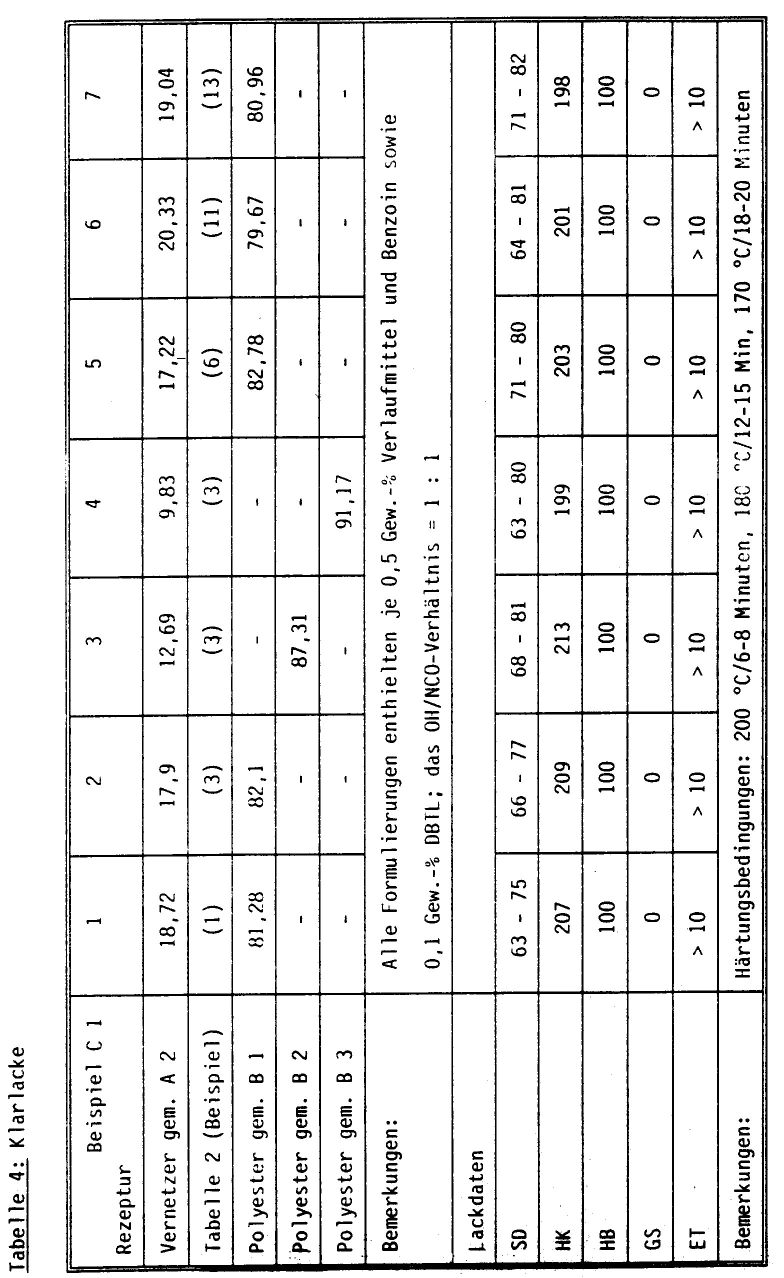

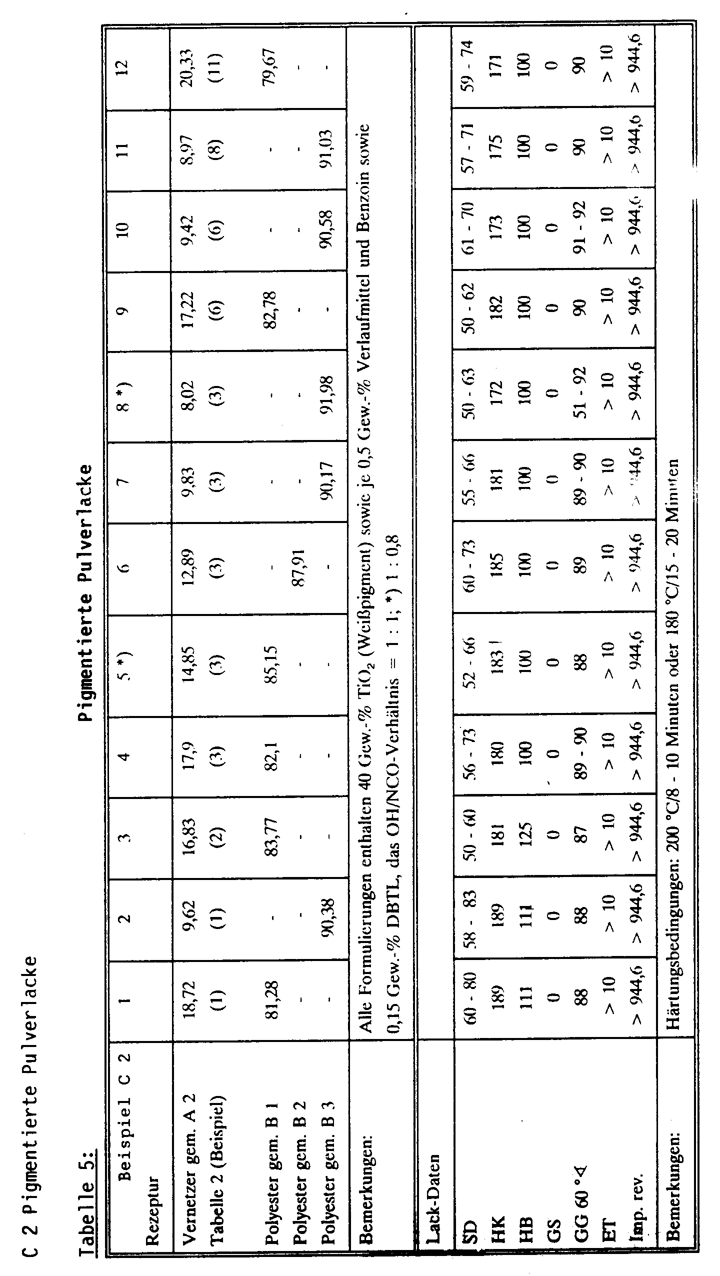

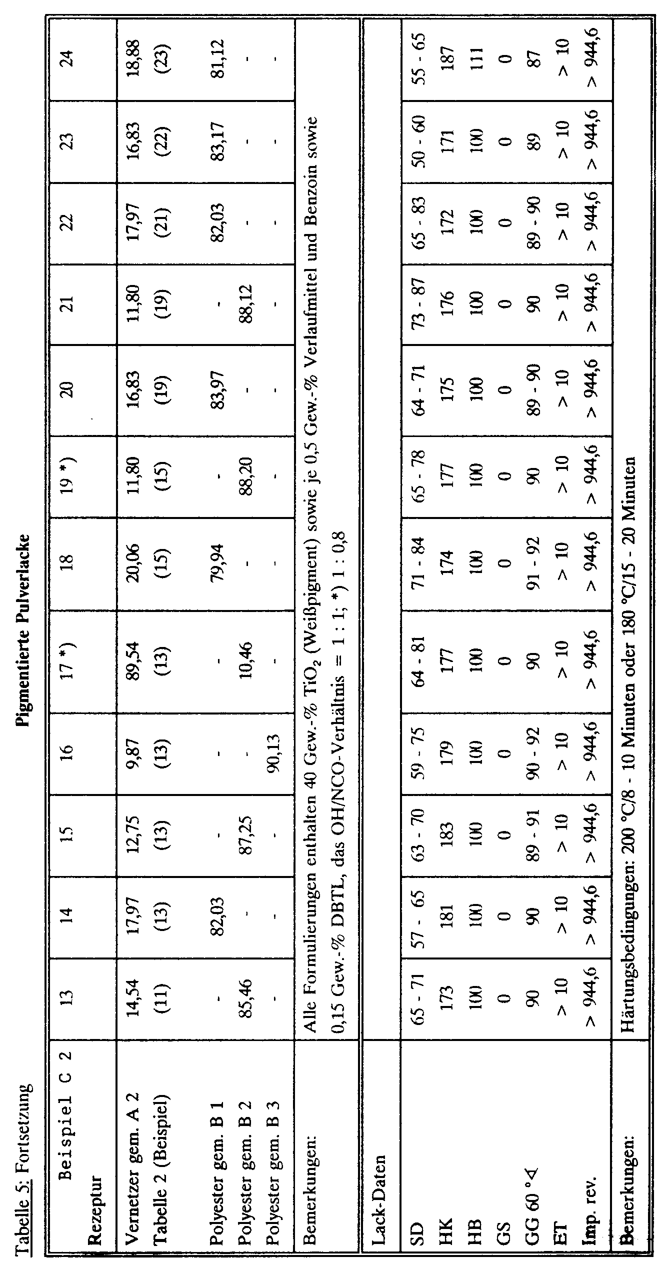

## Patentansprüche

1. Uretdiongruppenhaltige Polyisocyanate, enthaltend
A) 55 bis 87 Gew.-% Uretdion,
B) 10 bis 30 Gew.-% Blockierungsmittel,
C) 3 bis 30 Gew.-% Polyol mit mehr als zwei Hydroxylgruppen
und/oder Kettenverlängerer mit mehr als zwei Hydroxylgruppen, wobei die Polyisocyanate mehr als zwei endständige partiell oder vollständig blockierte Isocyanatgruppen enthalten und Molmassen von 1 000 bis 10 000 aufweisen.

2. Uretdiongruppenhaltige Polyisocyanate nach Anspruch 1,
dadurch gekennzeichnet,
daß sie Molmassen von 1 500 bis 5 000 aufweisen.

3. Uretdiongruppenhaltige Polyisocyanate nach Anspruch 1 oder 2,
dadurch gekennzeichnet,
daß Uretdione der Diisocyanate Hexamethylendiisocyanat, 2-Methylpentandiisocyanat-1.5, 2.2.4(2.4.4)-Trimethylhexamethylendiisocyanat oder Isophorondiisocyanat allein oder in Mischungen eingesetzt werden.

4. Uretdiongruppenhaltige Polyisocyanate nach mindestens einem der Ansprüche 1 bis 3,
dadurch gekennzeichnet,
daß als Blockierungsmittel Phenole, Alkohole, Acetessigsäureester, Lactame, Oxime, sterisch gehinderte sekundäre Amine oder Imidazoline eingesetzt werden.

5. Uretdiongruppenhaltige Polyisocyanate nach mindestens einem der Ansprüche 1 bis 4,
dadurch gekennzeichnet,
daß als Blockierungsmittel Caprolactam, Acetonoxim, Methylethylketoxim, Cyclohexanonoxim, Methylisobutylketoxim, Dicyclohexylamin oder Phenylimidazolin eingesetzt werden.

6. Uretdiongruppenhaltige Polyisocyanate nach mindestens einem der Ansprüche 1 bis 5,
dadurch gekennzeichnet,
daß als Polyole Trimethylolethan, Trimethylolpropan oder Trishydroxyethylisocyanurat allein oder in Mischungen eingesetzt werden.

7. Uretdiongruppenhaltige Polyisocyanate nach mindestens einem der Ansprüche 1 bis 6,
dadurch gekennzeichnet,
daß als Kettenverlängerer Polyester oder Polycaprolactone mit einer Funktionalität von mehr als zwei, mit einer Molmasse zwischen 230 und 2 000 und einer Hydroxylzahl zwischen 600 und 100 eingesetzt werden.

8. Uretdiongruppenhaltige Polyisocyanate nach mindestens einem der Ansprüche 1 bis 7,
dadurch gekennzeichnet,
daß als Kettenverlängerer Polyester oder Polycaprolactone mit einer Funktionalität von mehr als 2, mit einer Molmasse zwischen 250 bis 1 000 und Hydroxylzahlen zwischen 550 und 250 eingesetzt werden.

9. Uretdiongruppenhaltige Polyisocyanate nach den Ansprüchen 7 bis 8,
dadurch gekennzeichnet,
daß die Kettenverlängerer neben der herkömmlichen Carbonsäure mindestens ein Mol Polyol ausgewählt aus der Gruppe Trimethylolethan, Trimethylolpropan, Trishydroxyethylisocyanurat oder Pentaerythrit enthalten.

10. Uretdiongruppenhaltige Polyisocyanate nach den Ansprüchen 7 bis 9,
dadurch gekennzeichnet,
daß Kettenverlängerer auf Basis von ε-Caprolacton und/oder Hydroxycapronsäure eingesetzt werden.

11. Verfahren zur Herstellung von uretdiongruppenhaltigen Polyisocyanaten der Ansprüche 1 bis 10,
dadurch gekennzeichnet, daß
1. die partielle Umsetzung der NCO-Gruppen des Uretdions (Komponente A) mit der berechneten Menge Blockierungsmittel (Komponente B) erfolgt, und
2. anschließend in einer zweiten Stufe die partielle oder vollständige Umsetzung der restlichen NCO-Gruppen mit der Komponente C erfolgt.

12. Verfahren nach Anspruch 11,
dadurch gekennzeichnet,
daß die Umsetzung der 1. Stufe und/oder der 2. Stufe mit oder ohne Lösungsmittel erfolgt.

13. Verfahren nach den Ansprüchen 11 bis 12,
dadurch gekennzeichnet,
daß die 1. Stufe der Umsetzung diskontinuierlich oder kontinuierlich durch die Verwendung eines "Statischen Mischers" erfolgt.

14. Verfahren nach den Ansprüchen 11 oder 12,
dadurch gekennzeichnet,
daß die 2. Stufe der Reaktion im Intensivkneter erfolgt.

15. Verfahren nach Anspruch 14,
dadurch gekennzeichnet,
daß die 2. Stufe der Reaktion im Zweiwellenextruder erfolgt.

16. Verfahren nach mindestens einem der Ansprüche 11 bis 15,
dadurch gekennzeichnet,
daß Katalysatoren in einer Konzentration von 0,01 bis 1 Gew.-% eingesetzt werden.

17. Verfahren nach Anspruch 16,
dadurch gekennzeichnet,
daß Katalysatoren in einer Konzentration von 0,03 bis 0,5 Gew.-% eingesetzt werden.

18. Verfahren nach den Ansprüchen 16 oder 17,
dadurch gekennzeichnet,
daß organische Zinnverbindungen eingesetzt werden.

19. Verwendung der uretdiongruppenhaltigen Polyisocyanate gemäß den Ansprüchen 1 bis 10 in Kombination mit hydroxylgruppenhaltigen Polymeren zur Herstellung von transparenten oder pigmentierten Polyurethan-Pulverlacken mit hoher Reaktivität.

20. Transparente oder pigmentierte Polyurethan-Pulverlacke,
dadurch gekennzeichnet,
daß sie uretdiongruppenhaltige Polyisocyanate gemäß den Ansprüchen 1 bis 10, hydroxylgruppenhaltige Polymere sowie übliche Zusatz- und Hilfsstoffe enthalten.

21. Polyurethan-Pulverlacke nach Anspruch 20,
dadurch gekennzeichnet,
daß ihnen ein OH/NCO-Verhältnis von 1 : (0,6 bis 1,2) zugrunde liegt.

22. Polyurethan-Pulverlacke nach Anspruch 21,
dadurch gekennzeichnet,
daß ihnen ein OH/NCO-Verhältnis von 1 : 1 zugrunde liegt.

23. Polyurethan-Pulverlacke nach den Ansprüchen 19 bis 22,
dadurch gekennzeichnet,
daß den Pulverlacken Katalysatoren zugesetzt werden.

24. Polyurethan-Pulverlacke nach Anspruch 23,
dadurch gekennzeichnet,
daß als Katalysatoren organische Zinnverbindungen in einer Konzentration von 0,03 bis 0,5 Gew.-%, unter Einbeziehung der bereits enthaltenden Katalysatormenge aus der Umsetzung der Komponenten A bis C gemäß den Ansprüchen 1 bis 8, zugesetzt werden.

25. Polyurethan-Pulverlacke nach den Ansprüchen 19 bis 24,
dadurch gekennzeichnet,
daß als hydroxylgruppenhaltige Polymere Polyester mit einer Funktionalität > 2, einer OH-Zahl von 20 bis 200 mg KOH/g, vorzugsweise von 30 bis 150 mg KOH/g, einer Viskosität < 60 000 mPa·s, vorzugsweise < 40 000 mPa·s bei 160 °C und einem Schmelzpunkt ≧ 70 °C und ≦ 120 °C, vorzugsweise 75 °C bis 100 °C, eingesetzt werden.

26. Polyurethan-Pulverlacke nach den Ansprüchen 19 bis 24,
dadurch gekennzeichnet,
daß als hydroxylgruppenhaltige Polymere Polyester mit einer Funktionalität > 2, einer OH-Zahl von 30 bis 150 mg KOH/g, einer Viskosität < 40 000 mPa·s bei 160 °C und einem Schmelzpunkt 75 °C bis 100 °C, eingesetzt werden.

27. Verwendung der Polyurethan-Pulverlacke zum Aufbringen auf beliebige Substrate für hitzehärtbare Überzüge sowie die daraus hergestellten beschichteten hitzegehärteten Substrate.
